# EUROPÄISCHE PATENTSCHRIFT

(11) **EP 2 072 474 B1**
(45) Veröffentlichungstag und Bekanntmachung des Hinweises auf die Patenterteilung: **27.04.2011**
(21) Anmeldenummer: 07024626.9
(22) Anmeldetag: 19.12.2007
(51) Int. Cl.: C03B 3/02, C03B 5/00

(54) **Verfahren und Vorrichtung zum Recycling von organische Bestandteile enthaltendem Mineralwolleabfall**
Method and device for recycling mineral wool waste containing organic elements
Procédé et dispositif destinés au recyclage de déchets de laine minérale contenant des composants organiques

(43) Veröffentlichungstag der Anmeldung: 24.06.2009
(73) Patentinhaber: SCHWENK Dämmtechnik GmbH & Co KG, 86899 Landsberg (DE)
(72) Erfinder: Tenzler, Thomas, 86836 Untermeitingen (DE); Krichel, Jörg-Michael, 86899 Landsberg-Erpfting (DE)
(74) Vertreter: HOFFMANN EITLE

(56) Entgegenhaltungen:
- EP-A- 0 627 270
- US-A- 4 328 016
- US-A- 4 539 035
- US-A- 5 447 547
- US-A- 5 935 885

## Beschreibung

Die Erfindung betrifft ein Verfahren zum Recycling von organische Bestandteile enthaltendem Mineralwolleabfall sowie eine Vorrichtung zur Durchführung dieses Verfahrens.

Häufig sind Mineralwolleabfälle, insbesondere Glasfaserabfälle oder Glaswolleabfälle mit Bindemitteln oder anderen organischen Stoffen verunreinigt. Diese organischen Verunreinigungen sind vor der Zumischung des Mineralwolleabfalls zu einer Glasschmelze zu beseitigen. Dazu wird häufig ein vor den eigentlichen Schmelzprozess vorgeschaltetes, separates Recyclingverfahren eingesetzt, bei welchem der Mineralwolleabfall zunächst einmal auf eine Temperatur erhitzt wird, bei welcher die organischen Verschmutzungsbestandteile verbrennen und als Abgas entweichen können. Insbesondere beim Recyceln von Glasfaser- und Glaswollematerial besteht jedoch die Gefahr, dass das Glasfasermaterial beziehungsweise das Glaswollematerial währen dieses Verbrennungsvorgangs der organischen Bestandteile sintert. Derartiges gesintertes Material neigt jedoch dazu, die zum Recyceln eingesetzten Schmelzöfen, insbesondere Zyklon- oder Drehrohröfen, schnell zu verstopfen.

Aus der US 2002/0000100 A1 sind ein Verfahren und eine Vorrichtung zum Zuführen von Mineralwelleabfall zu einer Gasschmelze bekannt, bei welcher Mineralwolleabfall einer aus einem Glasschmelzofen ausfließenden Glasschmelze hinzudosiert wird, wobei der Mineralwolleabfall durch die in der Glasschmelze herrschende Temperatur ebenfalls schmilzt und sich mit der Glasschmelze vermischt.

Die WO 2006/018582 A1 offenbart ein Verfahren und eine Vorrichtung zum Recyceln von Glasfaserabfällen, bei welcher ein geschlossener Brennofen in seinem Bodenbereich mit aus dem Boden nach oben herausstehenden Gasbrennern sowie im Boden vorgesehenen Sauerstoffzuführöffnungen versehen ist. Auf den Boden wird Glasfaserabfall geschüttet, der dort einen Glasfaserabfallhaufen bildet, welcher sowohl die Sauerstoffzuführöffnungen, als auch die Gasbrenner abdeckt. Während der Erhitzung des Glasfaserabfalls durch die Gasbrenner wird Sauerstoff durch die Sauerstoffszuführöffnungen hinzudosiert. Der Glasfaserabfall verschmilzt dabei zu einem flüssigen Film, der durch eine Auslassöffnung aus dem Ofen ausfließt.

Aus der FR 2 873 682 sind auch ein Verfahren und eine Vorrichtung zum Verarbeiten von Mineralwolleab fall bekannt.

Aufgabe der vorliegenden Erfindung ist es, ein Verfahren und eine Vorrichtung zum Recycling von organische Bestandteile enthaltendem Mineralwolleabfall anzugeben, das beziehungsweise die die Nachteile des Standes der Technik überwindet und ein effizientes Recyceln des Mineralwolleabfalls und das Zuführen des Mineralwolleabfalls zu einer Glasschmelze gestattet.

Die das Verfahren betreffende Aufgabe wird durch das im Anspruch 1 angegebene Verfahren gelöst. Dabei wird der Mineralwolleabfall zunächst in eine Einlegevorrichtung eines Schmelz- oder Vorwärmaggregats eines Glasschmelzofens geführt. Dann wird ein sauerstoffhaltiger Gasstrom in die Einlegevorrichtung geleitet, um eine sauerstoffreiche Atmosphäre in der Einlegevorrichtung zu schaffen. Daraufhin werden die organischen Bestandteile in der Einlegevorrichtung verbrannt. Es wird somit kein vom eigentlichen Schmelzen des Glases separater Recyclingschritt vorgenommen, sondern der Recyclingvorgang zum Entfernen der organischen Bestandteile findet unmittelbar in der Einlegevorrichtung des Schmelz- oder Vorwärmaggregats des Glasschmelzofens statt, mittels welcher das Rohmaterial der Glasschmelze zugeführt wird. Durch das Zuführen des sauerstoffhaltigen Gasstroms in die Einlegevorrichtung, kann die Verbrennung der organischen Bestandteile in der Zuführschnecke während des Fördervorgangs des Mineralwolleabfalls zum Glasschmelzofen erfolgen.

Vorteilhaft ist dieses Verfahren für Mineralwolleabfall, der aus bindemittelhaltigen Mineralfasern besteht oder diese vorwiegend enthält. Dabei können die Mineralfasern Glaswolle- und/oder Steinwollefasern enthalten.

Bevorzugt wird eine Weiterbildung des Verfahrens, bei der der gewichtsmäßige Anteil der organischen Bestandteile des Mineralwolleabfalls zwischen 2 % und 25 %, besonders vorzugsweise zwischen 3 % und 10 %, liegt.

In einer anderen Realisierungsform des Verfahrens wird der Mineralwolleabfall entweder in reiner Form oder gemischt mit Gemenge und/oder Scherben eingelegt, wobei die Gewichtskonzentration des Mineralwolleabfalls an der Einlegevorrichtung 0,5 % bis 100 % beträgt. Dem aus bindemittelhaltigen Mineralfasern (zum Beispiel Glaswolle- oder Steinwollefasern) bestehenden Mineralwolleabfall werden somit Glasgemenge und/oder Glasscherben hinzugefügt.

Der Sauerstoffgehalt des Gasstroms liegt vorzugsweise im Bereich von 18 % bis 100 %. Dabei kann beispielsweise Umgebungsluft mit einem Sauerstoffgehalt von 20 % verwendet werden. Alternativ kann der Gasstrom auch aus technischem Sauerstoff, vorzugsweise mit einem Sauerstoffgehalt von 90 % bis 100 %, bestehen.

Das Verfahren lässt sich besonders gut realisieren, wenn als Einlegevorrichtung ein Schneckeneinleger oder ein Kolbeneinleger benutzt wird.

Vorteilhafterweise erfolgt die Zuführung des sauerstoffhaltigen Gasstroms in die Einlegevorrichtung lokal nach einer Einfüllöffnung und vor dem Eintritt in den Glasschmelzofen.

Der Druck des sauerstoffhaltigen Gasstroms in der Einlegevorrichtung ist höher, als der Druck im Schmelz- oder Vorwärmaggregat, so dass in der Einlegevorrichtung ein Überdruck herrscht. Dieser Überdruck beträgt vorzugsweise zwischen 1 mbar und 2 bar, besonders vorzugsweise zwischen 1 mbar und 100 mbar.

Die chemische Zusammensetzung der anorganischen Phase des Mineralwolleabfalls kann folgende Bestandteile enthalten: SiO₂, Al₂O₃, CaO, MgO, Na₂O+K₂O, B₂O₃, P₂O₅ und/oder Fe₂O₃.

Die chemische Zusammensetzung der anorganischen Phase des Abfalls weist beispielsweise folgende Gewichtsprozente unterschiedlicher chemischer Stoffe auf:

| | |
|---|---|
| SiO₂ | 35% bis 70 % |
| Al₂O₃ | 0% bis 27 % |
| CaO | 4% bis 20 % |
| MgO | 0% bis 6 % |
| Na₂O+K₂O | 0% bis 20 % |
| B₂O₃ | 0% bis 10 % |
| P₂O₅ | 0% bis 5 % |
| Fe₂O₃. | 0% bis 15 % |
| andere Oxide | 0% bis 5 %. |

Der die Vorrichtung betreffende Teil der Aufgabe, die der vorliegenden Erfindung zugrunde liegt, wird durch die Merkmale des Patentanspruchs 14 gelöst. Die erfindungsgemäße Vorrichtung zum Recycling von organische Bestanteile enthaltendem Mineralwolleabfall weist einen Glasschmelzofen und eine Einlegevorrichtung zum Zuführen des Mineralwolleabfalls in den Glasschmelzofen auf und zeichnet sich dadurch aus, dass die Einlegevorrichtung mit einer Gaszuführeinrichtung versehen ist, durch welche ein sauerstoffhaltiger Gasstrom in die Einlegevorrichtung zuführbar ist.

Vorzugsweise beschickt die Einlegevorrichtung ein Schmelzaggregat des Glasschmelzofens mit dem Mineralwolleabfall. Alternativ kann die Einlegevorrichtung auch ein Vorwärmaggregat des Glasschmelzofens mit dem Mineralwolleabfall beschicken.

In einer bevorzugten Ausführungsform ist die Einlegevorrichtung als Schneckeneinleger ausgebildet und weist einen Einfülltrichter für die Beschickung des Schneckeneinlegers mit dem Mineralwolleabfall auf.

Vorteilhaft ist es, wenn die Gäszuführeinrichtung zwischen dem Einfülltrichter und dem Schneckeneinleger in die Einlegevorrichtung mündet.

Die Gaszuführeinrichtung kann aber auch am Kopf der Einlegevorrichtung, beispielsweise im Bereich eines den Kopf umgebenden Wasserkühlrings, in die Einlegevorrichtung münden.

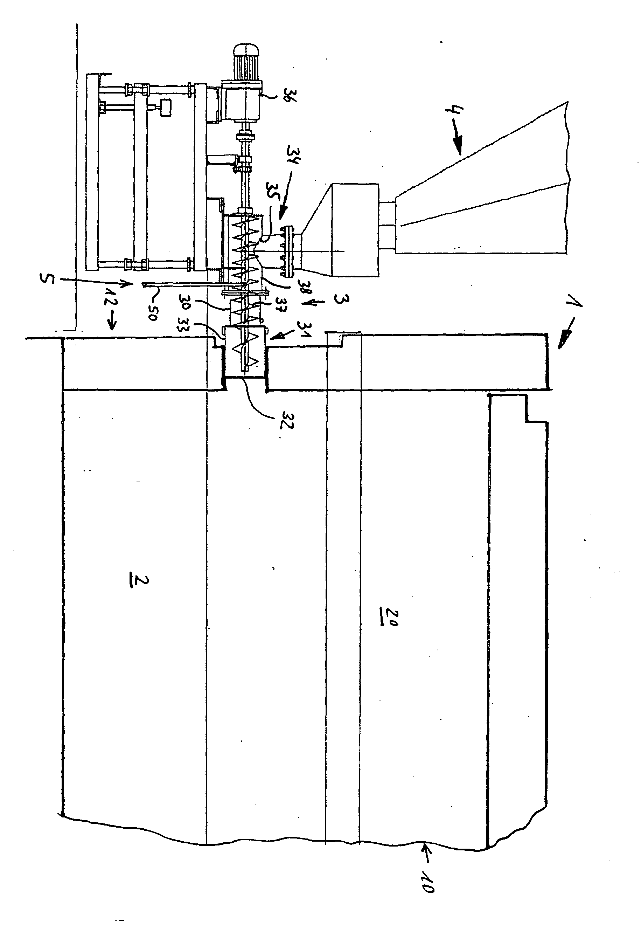

Die Erfindung wird nachfolgend anhand eines Beispiels unter Bezugnahme auf die Zeichnung näher erläutert; in dieser zeigt die einzige Figur eine schematische Darstellung der erfindungsgemäßen Vorrichtung.

Die Figur zeigt schematisch einen Glasschmelzofen 1 mit einem Schmelzaggregat 10, welches auf herkömmliche Weise auf eine Temperatur erhitzt wird, die oberhalb der Schmelztemperatur von Glas liegt. Es bildet sich daher im Schmelzaggregat 10 des Glasschmelzofens 1 eine Glasschmelze 2 im wannenartigen Gehäusekörper 12 des Schmelzaggregats 10 aus.

Eine als Schneckeneinleger mit einer von einem Motor 36 angetriebenen Förderschnecke 37, die in einem Zylindermantel 38 drehbar vorgesehen ist, ausgebildete Einlegevorrichtung 3 ist derart am Glasschmelzofen 1 angebracht, dass der am Kopf 31 der Einlegevorrichtung 3 gelegene Ausgang des in der Figur horizontal verlaufenden Schneckeneinlegers 30 oberhalb der Glasschmelze 2 in das Schmelzaggregat 10 mündet, wobei der Kopf 31 von einem Wasserkühlring 33 umgeben ist. Im Bereich seines von dieser Mündung 32 abgewandten Endabschnitts ist der Schneckeneinleger 30 mit einem Einfülltrichter 34 verbunden, aus dem Mineralwolleabfall durch eine Einfüllöffnung 35 der Einlegevorrichtung in den Schneckeneinleger 30 geschüttet werden kann. Oberhalb des Einfülltrichters 34 ist in der Figur eine Schütt- und Silovorrichtung-4 für Mineralwolleabfall gezeigt, die an ihrem unteren Ende mit dem Einfülltrichter 34 verbunden ist.

Eine in der Figur nur schematisch als Leitung 50 dargestellte Gaszuführeinrichtung 5 mündet zwischen dem Einfülltrichter 34 und dem Kopf 31 der Einlegevorrichtung 3 in den Schneckeneinleger 30. Die Leitung 50 der Gaszuführeinrichtung 5 ist an ihrem anderen Ende mit einem (nicht gezeigten) Druckgasbehälter verbunden, in welchem unter Überdruck stehendes sauerstoffreiches Gasgemisch enthalten ist.

Der in den Einfülltrichter geschüttete Mineralwolleabfall, der vorwiegend aus Glaswolle und/oder Steinwolle besteht und auch Gemenge und Scherben enthalten kann, wird bereits im Schneckeneinleger 30 von dem durch die Gaszuführeinrichtung 5 in die Einlegevorrichtung 3 zugeführten sauerstoffreichen Gasgemisch durchströmt. Aufgrund des Überdrucks dringt das sauerstoffreiche Gasgemisch weiter in den Schneckeneinleger 30 ein, wodurch im Schneckeneinleger 30 eine sauerstoffangereicherte Atmosphäre gebildet wird. Durch die Mündung 32 des Schneckeneinlegers 30 dringt Wärme als Wärmestrahlung und Konvektion aus dem Glasschmelzofen 1 in den Schneckeneinleger 30 ein, so dass durch diese Wärme und die sauerstoffangereicherte Atmosphäre organische Bestandteile im Mineralwolleabfall im Schneckeneinleger verbrennen. Die Verbrennungsgase treten aus der Mündung 32 in die sich oberhalb der Glasschmelze 2 befindende Oberbauatmosphäre 20 ein und der von den organischen Bestandteilen befreite Mineralwolleabfall fällt in die Glasschmelze 2, wo er geschmolzen wird.

Auf diese Weise verbrennen die organischen Bestandteile im Mineralwolleabfall größtenteils bereits frühzeitig in der im Schneckeneinleger 30 lokal geschaffenen sauerstoffreichen Umgebung. Folglich wirken sich die ursprünglich im Mineralwolleabfall enthaltenen organischen Bestandteile nicht mehr störend auf die Eigenschaften der Glasschmelze aus, da sie nicht mehr in die Glasschmelze eindringen. Bei den im Schneckeneinleger 30 ablaufenden Verbrennungsvorgängen möglicherweise entstehende Schwelgase, die in die Oberbauatmosphäre 20 eintreten, werden durch die hohen Temperaturen der Oberbauatmosphäre 20 unschädlich gemacht.

Vorteilhaft bei dieser erfindungsgemäßen Ausgestaltung ist auch, dass aufgrund der Durchführung des Recyclingprozesses in der Einlegevorrichtung 3 unmittelbar an dem Glasschmelzofen 1 keine zusätzliche Energie für den Verbrennungsvorgang der organischen Bestandteile zugeführt werden muss, da die vom Glasschmelzofen 1 ausgehende Strahlungswärme und Konvektionswärme zur Einleitung und Durchführung des Verbrennungsvorgangs ausreichend ist.

Wird zur Beschleunigung des Verbrennungsvorgangs im Schneckeneinleger 30 keine sauerstoffangereicherte Gasmischung zugeführt, sondern einfache Umgebungsluft, so ist der bei der Verbrennung ablaufende Oxidationsprozess möglicherweise nicht so wirksam wie beim Zuführen von sauerstoffangereicherter Gasmischung, doch werden - wie bereits ausgeführt worden ist - eventuell entstehende Schwelgase durch die hohen Temperaturen der Oberbauatmosphäre unschädlich gemacht. Dadurch ist es möglich, deutlich höhere Mengen von organisch belastetem Mineralwolleabfall, zum Beispiel Glasfasern, in den Glasschmelzofen 1 zu recyceln, ohne dass zusätzlich Sauerstoff hinzugegeben werden muss.

Die Erfindung ist nicht auf das obige Ausführungsbeispiel beschränkt, das lediglich der allgemeinen Erläuterung des Kerngedankens der Erfindung dient.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zum Recycling von organische Bestandteile enthaltendem Mineralwolleabfall mit den Schritten:
- Zuführen des Mineralwolleabfalls in eine Einlegevorrichtung eines Schmelz- oder Vorwärmaggregats eines Glasschmelzofens;
- Zuführen eines sauerstoffhaltigen Gasstroms in die Einlegevorrichtung zur Erzeugung einer sauerstoffreichen Atmosphäre in der Einlegevorrichtung, sodass der Druck des sauerstoffhaltigen Gasstroms in der Einlegevorrichtung höher ist, als der Druck im Schmelz- oder Vorwärmaggregat, so dass in der Einlegevorrichtung ein Überdruck herrscht;
- Verbrennen der organischen Bestandteile in der Einlegevorrichtung.

2. Verfahren nach Anspruch 1,
**dadurch gekennzeichnet,**
**dass** der Mineralwolleabfall aus bindemittelhaltigen Mineralfasern besteht.

3. Verfahren nach Anspruch 2,
**dadurch gekennzeichnet,**
**dass** die Mineralfasern Glaswolle- und/oder Steinwollefasern enthalten.

4. Verfahren nach einem der Ansprüche 1 bis 3,
**dadurch gekennzeichnet,**
**dass** der Gewichtsprozentmäßige Anteil der organischen Bestandteile des Mineralwolleabfalls zwischen 2 % und 25 %, vorzugsweise zwischen 3 % und 10 %, liegt.

5. Verfahren nach einem der Ansprüche 1 bis 3,
**dadurch gekennzeichnet,**
**dass** der Mineralwolleabfall entweder in reiner Form oder gemischt mit Gemenge und/oder Scherben eingelegt wird, wobei die Gewichtsprozentkonzentration des Mineralwolleabfalls an der Einlegevorrichtung 0,5 % bis 100 % beträgt.

6. Verfahren nach Anspruch 1,
**dadurch gekennzeichnet,**
**dass** der Gasstrom einen Sauerstoffgehalt von 18 % bis 100 % aufweist.

7. Verfahren nach Anspruch 6,
**dadurch gekennzeichnet,**
**dass** der Gasstrom Umgebungsluft mit einem Sauerstoffgehalt von 20 % ist.

8. Verfahren nach Anspruch 6,
**dadurch gekennzeichnet,**
**dass** der Gasstrom technischer Sauerstoff, vorzugsweise mit einem Sauerstoffgehalt von 90 % bis 100 %, ist.

9. Verfahren nach Anspruch 1,
**dadurch gekennzeichnet,**
**dass** als Einlegevorrichtung ein Schneckeneinleger benutzt wird.

10. Verfahren nach Anspruch 1,
**dadurch gekennzeichnet,**
**dass** als Einlegevorrichtung ein Kolbeneinleger benutzt wird.

11. Verfahren nach Anspruch 1,
**dadurch gekennzeichnet,**
**dass** die Zuführung des sauerstoffhaltigen Gasstroms in die Einlegevorrichtung lokal nach einer Einfüllöffnung und vor dem Eintritt in den Glasschmelzofen erfolgt.

12. Verfahren nach Anspruch 1,
**dadurch gekennzeichnet,**
**dass** der Überdruck zwischen 1 mbar und 1 bar, vorzugsweise zwischen 1 mbar und 100 mbar beträgt.

13. Verfahren nach Anspruch 12,
**dadurch gekennzeichnet,**
**dass** die chemische Zusammensetzung der anorganischen Phase des Mineralwolleabfalls folgende Bestandteile enthält:
SiO₂, Al₂O₃, CaO, MgO, Na₂O+K₂O, B₂O₃, P₂O₅ und/oder Fe₂O₃.

14. Vorrichtung zum Recycling von organische Bestandteile enthaltendem Mineralwolleabfall mit einem Glasschmelzofen (1) und einer Einlegevorrichtung (3) zum Zuführen des Mineralwolleabfalls in den Glasschmelzofen (1) ,
**dadurch gekennzeichnet,**
**dass** die Einlegevorrichtung (3) mit einer Gaszuführeinrichtung (5) versehen ist, welche über eine Leitung (50) mit einem Druckgasbehälter verbunden ist, durch welche ein sauerstoffhaltiger Gasstrom in die Einlegevorrichtung.(3) zuführbar ist, und der Druck des sauerstoffhaltigen Gasstroms in der Einlegevorrichtung höher ist, als der Druck im Schmelz- oder Vorwärmaggregat, so dass in der Einlegevorrichtung ein Überdruck herrscht.

15. Vorrichtung nach Anspruch 14,
**dadurch gekennzeichnet,**
**dass** die Einlegevorrichtung (3) ein Schmelzaggregat (10) des Glasschmelzofens (1) mit dem Mineralwolleabfall beschickt.

16. Vorrichtung nach Anspruch 14,
**dadurch gekennzeichnet,**
**dass** die Einlegevorrichtung (3) ein Vorwärmaggregat des Glasschmelzofens (1) mit dem Mineralwolleabfall beschickt.

17. Vorrichtung nach Anspruch 16,
**dadurch gekennzeichnet,**
**dass** die Einlegevorrichtung (3) als Schneckeneinleger (30) ausgebildet ist und einen Einfülltrichter (34) für die Beschickung des Schneckeneinlegers (30) mit dem Mineralwolleabfall aufweist.

18. Vorrichtung nach Anspruch 17,
**dadurch gekennzeichnet,**
**dass** die Gaszuführeinrichtung (5) zwischen dem Einfülltrichter (34) und dem Kopf (31) der Einlegevorrichtung (3) in den Schneckeneinleger (30) mündet.

19. Vorrichtung nach Anspruch 17,
**dadurch gekennzeichnet,**
**dass** die Gaszuführeinrichtung (5) am Kopf (31) der Einlegevorrichtung (3) in die Einlegevorrichtung (3) mündet.

## Claims

1. Process for recycling mineral wool waste containing organic constituents having the steps:
- supplying mineral wool waste to a feeder of a melting or pre-heating unit of a glass-melting furnace;
- supplying an oxygen-containing gas stream to the feeder to produce an oxygen-rich atmosphere in the feeder, so that the pressure of the oxygen-containing gas stream in the feeder is higher than the pressure in the melting or pre-heating unit so that excess pressure prevails in the feeder;
- combusting the organic constituents in the feeder.

2. Process according to claim 1, **characterised in that** the mineral wool waste consists of binder-containing mineral fibres.

3. Process according to claim 2, **characterised in that** the mineral fibres contain glass wool fibres and/or rock wool fibres.

4. Process according to one of claims 1 to 3, **characterised in that** the weight per cent portion of organic constituents of the mineral wool waste lies between 2% and 25%, preferably between 3% and 10 %.

5. Process according to one of claims 1 to 3, **characterised in that** the mineral wool waste is fed either in pure form or mixed with batch and/or broken pieces, wherein the weight per cent concentration of the mineral wool waste at the feeder is 0.5% to 100%.

6. Process according to claim 1, **characterised in that** the gas stream has an oxygen content of 18% to 100%.

7. Process according to claim 6, **characterised in that** the gas stream is ambient air having an oxygen content of 20%.

8. Process according to claim 6, **characterised in that** the gas steam is industrial oxygen, preferably having an oxygen content of 90% to 100%.

9. Process according to claim 1, **characterised in that** a screw feeder is used as the feeder.

10. Process according to claim 1, **characterised in that** a piston feeder is used as the feeder.

11. Process according to claim 1, **characterised in that** the supply of oxygen-containing gas stream to the feeder is effected locally downstream of a feed opening and before the point of entry to the glass-melting furnace.

12. Process according to claim 1, **characterised in that** the excess pressure is between 1 mbar and 1 bar, preferably between 1 mbar and 100 mbar.

13. Process according to claim 12, **characterised in that** the chemical composition of the inorganic phase of the mineral wool waste contains the following constituents:
SiO₂, Al₂O₃, CaO, MgO, Na₂O+K₂O, B₂O₃, P₂O₅ and/or Fe₂O₃.

14. Device for recycling mineral wool waste containing organic constituents having a glass-melting furnace (1) and a feeder (3) for supplying mineral wool waste to the glass-melting furnace (1), **characterised in that** the feeder (3) is provided with a gas-supply device (5) which is connected via a pipe (50) to a compressed gas cylinder, by means of which an oxygen-containing gas stream can be supplied to the feeder (3), and the pressure of the oxygen-containing gas stream in the feeder is higher than the pressure in the melting or pre-heating unit so that excess pressure prevails in the feeder.

15. Device according to claim 14, **characterised in that** the feeder (3) charges a melting unit (10) of the glass-melting furnace (1) with the mineral wool waste.

16. Device according to claim 14. **characterised in that** the feeder (3) charges a pre-heating unit of the glass-melting furnace (1) with the mineral wool waste.

17. Device according to claim 16, **characterised in that** the feeder (3) is designed as a screw feeder (30) and has a feed funnel (34) for charging the screw feeder (30) with the mineral wool waste.

18. Device according to claim 17, **characterised in that** the gas-supply device (5) leads into the screw feeder (30) between the feed funnel (34) and the head (31) of the feeder (3).

19. Device according to claim 17, **characterised in that** the gas-supply device (5) leads into the feeder (3) at the head (31) of the feeder (3).

## Revendications

1. Procédé destiné au recyclage de déchets de laine minérale contenant des composants organiques, comprenant les étapes consistant à :
- amener les déchets de laine minérale dans un dispositif d'introduction d'un agrégat de fusion ou de préchauffage d'un four de verrerie ;
- amener un flux de gaz contenant de l'oxygène dans le dispositif d'introduction, pour produire une atmosphère riche en oxygène dans le dispositif d'introduction, de manière que la pression du flux de gaz contenant de l'oxygène dans le dispositif d'introduction soit supérieure à la pression dans l'agrégat de fusion ou de préchauffage, de manière qu'une surpression règne dans le dispositif d'introduction ;
- combustion des composants organiques dans le dispositif d'introduction.

2. Procédé selon la revendication 1,
**caractérisé en ce que**
les déchets de laine minérale sont composés de fibres minérales contenant un liant.

3. Procédé selon la revendication 2,
**caractérisé en ce que**
les fibres minérales contiennent des fibres de laine de verre et/ou de laine de roche.

4. Procédé selon l'une des revendications 1 à 3,
**caractérisé en ce que**
la proportion, exprimée en pourcentage en poids, des composants organiques des déchets de laine minérale est dans la fourchette comprise entre 2 % et 25 %, de préférence entre 3 % et 10 %.

5. Procédé selon l'une des revendications 1 à 3,
**caractérisé en ce que**
les déchets de laine minérale sont introduits soit sous forme pure, soit mélangés avec une pâte et/ou des copeaux, la concentration, exprimée en pourcentage en poids, des déchets de laine minérale au dispositif d'introduction étant dans la fourchette comprise entre 0,5 % à 100 %.

6. Procédé selon la revendication 1,
**caractérisé en ce que**
le flux de gaz présente une teneur en oxygène dans la fourchette comprise entre 18 % et 100 %.

7. Procédé selon la revendication 6,
**caractérisé en ce que**
le flux de gaz est de l'air ambiant avec une teneur en oxygène de 20 %.

8. Procédé selon la revendication 6,
**caractérisé en ce que**
le flux de gaz est de l'oxygène technique, de préférence avec une teneur en oxygène dans la fourchette comprise entre 90 % et 100 %.

9. Procédé selon la revendication 1,
**caractérisé en ce qu'**
un introducteur à vis est utilisé en tant que dispositif d'introduction.

10. Procédé selon la revendication 1,
**caractérisé en ce qu'**
un introducteur à piston est utilisé en tant que dispositif d'introduction.

11. Procédé selon la revendication 1,
**caractérisé en ce que**
l'amenée du flux de gaz contenant de l'oxygène dans le dispositif d'introduction s'effectue localement après une ouverture d'introduction et avant l'entrée dans le four de verrerie.

12. Procédé selon la revendication 1,
**caractérisé en ce que**
la surpression est dans la fourchette comprise entre 1 mbar et 1 bar, de préférence entre 1 mbar et 100 mbar.

13. Procédé selon la revendication 12,
**caractérisé en ce que**
la composition chimique de la phase non organique des déchets de laine minérale contient les composants suivants :
SiO₂, Al₂O₃, CaO, MgO, Na₂O+K₂O, B₂O₃, P₂O₅ et/ou Fe₂O₃.

14. Dispositif destiné au recyclage de déchets de laine minérale contenant des composants organiques, avec un four de verrerie (1) et un dispositif d'introduction (3), pour l'amenée des déchets de laine minérale dans le four de verrerie (1),
**caractérisé en ce que**
le dispositif d'introduction (1) est muni d'un dispositif d'amenée de gaz (5), relié à un réservoir à gaz sous pression par l'intermédiaire d'une conduite (50), au moyen duquel un flux de gaz contenant de l'oxygène est susceptible d'être amené dans le dispositif d'introduction (3), et la pression du flux de gaz contenant de l'oxygène, dans le dispositif d'introduction, est plus élevée que la pression dans l'agrégat de fusion ou de préchauffage, de manière qu'une surpression règne dans le dispositif d'introduction.

15. Dispositif selon la revendication 14,
**caractérisé en ce que**
le dispositif d'introduction (3) charge un agrégat de fusion (10) du four de verrerie (1) avec les déchets de laine minérale.

16. Dispositif selon la revendication 14,
**caractérisé en ce que**
le dispositif d'introduction (3) charge un agrégat de préchauffage du four de verrerié (1) avec les déchets de laine minérale.

17. Dispositif selon la revendication 16,
**caractérisé en ce que**
le dispositif d'introduction (3) est réalisé sous forme d'introducteur à vis (30) et présente un entonnoir d'introduction (34) pour le chargement de l'introducteur à vis (30) avec les déchets de laine minérale.

18. Dispositif selon la revendication 17,
**caractérisé en ce que**
le dispositif d'amenée de gaz (5) débouche dans l'introducteur à vis (30), entre l'entonnoir d'introduction (34) et la tête (31) du dispositif d'introduction (3).

19. Dispositif selon la revendication 17,
**caractérisé en ce que**
le dispositif d'amenée de gaz (5) débouche sur la tête (31) du dispositif d'introduction (3) dans le dispositif d'introduction (3).
